# EUROPÄISCHE PATENTSCHRIFT

(11) **EP 1 238 701 B1**
(45) Veröffentlichungstag und Bekanntmachung des Hinweises auf die Patenterteilung: **29.10.2008**
(21) Anmeldenummer: 02004356.8
(22) Anmeldetag: 04.03.2002
(51) Int. Cl.: B01J 23/80, B01J 23/72, B01J 33/00, B01J 37/03, B01J 37/00, C01B 3/32

(54) **Verfahren zur Herstellung eines Methanolreformierungskatalysators mit verringertem Volumenschwund**
Process for the prepration of a Methanol reforming catalyst having a reduced volume shrinkage
Procédé pour la préparation d'un catalyseur de reformage du méthanol à taux de retrait réduit

(30) Priorität: 08.03.2001 DE 10111198
(43) Veröffentlichungstag der Anmeldung: 11.09.2002
(73) Patentinhaber: BASF SE, 67056 Ludwigshafen (DE); NuCellSys GmbH, 73230 Kirchheim/Teck-Nabern (DE)
(72) Erfinder: Hölzle, Markus, Dr., 67281 Kirchheim (DE); Sprague, Michael Jolyon, Dr., 68161 Mannheim (DE); Harth, Klaus, Dr., 67317 Altleiningen (DE); Schuessler, Martin, 89073 Ulm/Donau (DE); Karl, Martin, 73272 Neidlingen (DE); Boneberg, Stefan, 72660 Beuren (DE)
(74) Vertreter: Isenbruck, Günter

(56) Entgegenhaltungen:
- EP-A- 0 296 734
- EP-A- 1 238 702
- DE-A- 19 725 006
- DE-A- 19 739 773
- DE-A- 19 801 373
- US-A- 5 928 985

## Beschreibung

Die vorliegende Erfindung betrifft ein Verfahren zur Herstellung eines Methanolreformierungskatalysators.

Bei Fahrzeugen mit Brennstoffzellenantrieb wird der notwendige Wasserstoff vorteilhafterweise erst beim Fahrbetrieb aus einem flüssigen Kraftstoff erzeugt. Bei Methanol als Kraftstoff geschieht dies primär mittels Dampfreformierung, autothermer Reformierung oder partieller Oxidation. Beim Einsatz von Kohlenwasserstoffen als Kraftstoff ist eine Wasserstoffgewinnung über partielle Oxidation oder autotherme partielle Oxidation möglich. Das als Haupt- bzw. Nebenprodukt immer mitgebildete CO muß entweder durch Wassergas-Shift entfernt oder durch Selektivoxidation in für die Brennstoffzelle unschädliches CO₂ oxidiert werden.

Die Wasserdampfreformierung von Methanol und die CO-Shiftreaktion werden von Cu-haltigen Katalysatoren beschleunigt. Meist handelt es sich um Stoffe der chemischen Zusammensetzung CuO/ZnO/MeO mit MeO = z.B. Al₂O₃, ZrO₂, La₂O₃, Cr₂O₃. Derartige Katalysatoren werden in oxidischer Form hergestellt und dann meist im Reaktor unter reduzierenden Bedingungen aktiviert, wobei sich dann das CuO zu elementarem Cu umwandelt, der eigentlichen katalytisch aktiven Spezies. Die Reduktion derartiger Katalysatoren ist immer mit einem Volumen- und Massenschwund des Katalysatorformkörpers verbunden. Dieser liegt typischerweise in der Größenordnung zwischen 10 und 25%. Dies führt dazu, daß bei einem komplett befüllten Reaktor (z.B. einem Rohrbündelreaktor oder einem Plattenwärmetauscherreaktor) bis zu einem Viertel des Reaktionsraumes ungenutzt bleibt. Dies ist insbesondere bei mobilen Reformern, die so kompakt wie möglich gebaut werden, nicht wünschenswert.

Der Einsatz von Katalysatoren zur Wasserstofferzeugung bei mobilen Anwendungen, primär in Brennstoffzellen betriebenen Pkw, setzt Rahmenbedingungen, die weit über das hinausgehen, was bei industriellen Anwendungen notwendig ist:

So ist auf Grund des geringen Platzangebots im Pkw die Größe der Reaktoren ebenfalls stark limitiert. Der im Reaktor vorhandene Reaktionsraum muß vollständig mit Katalysator gefüllt sein, damit kein überschüssiges Leerraumvolumen vorhanden ist. Durch den gebildeten Leerraum kann eine Fixierung des Katalysators aufgehoben werden. Liegt der Katalysator z.B. als Schüttung vor, so können die Katalysatorpellets dann durch die hohen mechanischen Belastungen beim Fahrbetrieb umherfliegen. Dies kann zu einer deutlichen Erhöhung des Abriebs führen. Dieser Abrieb ist unerwünscht, da er zu Verstopfungen oder anderweitigen Beeinträchtigungen nachgeschalteter Komponenten führen kann.

Ein zusätzliches Problem kann dann entstehen, wenn die Reformer direkt beheizt werden. Hierbei wird auf eine Wärmeträgerflüssigkeit verzichtet, vielmehr wird die für die Reformierung notwendige Wärme direkt durch katalytische Verbrennung von Wasserstoff oder Methanol erzeugt. Bei einer derartigen Art der Wärmeerzeugung kann es rasch zu Überhitzungen kommen, wenn Teile der Reaktorrohre bzw. platten nicht mit Katalysator in Kontakt stehen. Eine derartige Überhitzung führt einerseits zu Materialermüdungen am Reaktor, kann aber andererseits auch zur Verkokung des eingesetzten Kraftstoffs führen.

Das Problem des Volumenschwunds ist schon länger bekannt, und es sind auch Lösungsansätze hierfür beschrieben. So betrifft EP-A-0 884 272 die Voralterung eines Cu-haltigen Katalysators durch Methanolreformierung für ca- 50 Stunden. Die Voralterung kann in einem gesonderten Reaktor oder im eigentlichen Reformerreaktor geschehen, wobei im letztgenannten Fall mehrfach Katalysator nachgefüllt werden muß.

EP-A-0 884 270 betrifft ein anderes Vorbehandlungsverfahren für das gleiche Katalysatorsystem. Hier wird der Katalysator unter inerter oder oxidierender Atmosphäre bei Temperaturen > 300°C vorgealtert. Jedoch ist der Volumenschwund bei dieser Art der Vorbehandlung nicht mit dem Volumenschwund bei Beaufschlagung des Katalysators mit Wasserstoff zu vergleichen. Das Tempern eines Katalysators unter oxidierender/inerter Atmosphäre führt lediglich zu einer Zersetzung von noch vorhandener Hydroxid- oder Carbonatspezies aus dem ursprünglichen Fällprodukt und bei höheren Temperaturen zu einem Ausbrennen des Tablettierhilfsmittels wie Graphit oder Magnesiumstearat. Eine derartige Behandlung führt nicht zur Reduktion des Kupferoxidanteils im Katalysator zu elementarem Kupfer, jedoch ist gerade die Reduktion des Kupferoxids zu Kupfer primär für den Volumenschwund der Katalysatoren verantwortlich, da bei der Reduktion die Kupferkomponente, die beim Fällen homogen in der Trägermatrix verteilt ist, aus dieser herausgelöst wird und somit zahlreiche mikroskopisch kleine Hohlräume verbleiben. Dies wird dann umso deutlicher, wenn man sich bewusst macht, dass ein typischer Katalysatorvorläufer über eine Dichte von ca. 1 g/ml verfügt, wohingegen Cu als Metall, wie es nach der Reduktion vorliegt, eine Dichte von 9 g/ml besitzt. Ein unter oxidischen/inerten Bedingungen getemperter Katalysator wird zwar an Volumen verlieren, der Volumenschwund bei anschließendem Aktivieren unter reduzierenden Bedingungen wird jedoch größer sein als der Volumenschwund beim Tempern ohne Reduktionsmittel.

Gemäß DE-A-198 01 373 wird der Katalysator vor dem Einbringen in den Reaktor reduziert und anschließend wieder deaktiviert.

Ein ebenfalls immer auftretender, negativer Nebeneffekt bei der Reduktion von Katalysatoren ist eine deutliche Verringerung der mechanischen Stabilität. Insbesondere bei Katalysatoren in Tablettenform ist die Ausbauhärte (Seitendruckfestigkeit/Stirndrukfestigkeit) oftmals nur noch ein Bruchteil der Ausgangshärte, bei deren Messung der Katalysator noch in oxidischer Form vorlag. Die geringe mechanische Stabilität der Tabletten ist bei mobilen Reformern jedoch unerwünscht. Liegt z.B. eine verdichtete Schüttung aus Katalysatortabletten vor, so gibt es im Fahrbetrieb immer eine gewisse Reibung der Tabletten aneinander, was insbesondere an den Ecken und Kanten der Tabletten zu erhöhtem Abrieb führen kann. Dieser Abrieb ist weitgehend unabhängig davon, ob sich - bedingt durch den Volumenschwund - oberhalb der Schüttung ein Hohlraum bildet.

Um eine auch im reduzierten Zustand mechanisch stabile Katalysatortablette zu erhalten, gibt es unterschiedliche Ansätze, die einerseits auf eine Verbesserung der Aktivmasse abzielen, andererseits auch Tablettierzusätze zur Erhöhung der mechanischen Stabilität beschreiben. So wird in DE-A-195 05 347 ein Verfahren beschrieben, bei dem ein Cuhaltiger Katalysator durch Zusatz von Cu- oder Aluminiumpulver tablettiert wird. Dies führt zu einer deutlichen Erhöhung der Härte des Katalysators auch im reduzierten Zustand. Ein Nachteil dieses Verfahrens ist es jedoch, daß die Aktivität derartiger Katalysatoren immer geringer ist als die Aktivität von vergleichbaren Katalysatoren ohne Metallzusatz.

US 5,928,985 betrifft Kupferkatalysatoren und insbesondere ein Verfahren zum Passivieren von reduzierten Kupferkatalysatoren. Es wird ausgeführt, dass es vorteilhaft sein kann, vorreduzierte und sodann passivierte Katalysatoren einzusetzen, insbesondere was den Füllgrad von Reaktoren angeht. Es wird angegeben, dass ein Katalysatorvorläufer reduziert und sodann passiviert werden kann und die Zusammensetzung häufig in Pellet- oder Granulatform vor oder nach dem Calcinieren überführt wird. In manchen Fällen könne es aber wünschenswert sein, die Überführung in Granulat oder Pellets nach der Reduktion der Kupferverbindung durchzuführen.

EP-A-0 296 734 betrifft einen Kupferkatalysator, der Zinkoxid und/oder Aluminiumoxid enthält, für die Kohlenmonoxidumwandlung. Gemäß Beispiel 2 wird ein kupferhaltiger Katalysator gefällt und nach dem Trocknen als Pulver reduziert, ohne dass calciniert wird. Der Katalysator wird nach der Reduktion tablettiert.

DE-A 197 39 773 betrifft einen Kupfer-, Zinkoxid- und Aluminiumoxid-haltigen Katalysator zur Dampfreformierung von Methanol. Der Katalysator wird durch Fällung von Vorläufersalzlösungen, anschließendes Trocknen und Calcinieren, Formgeben und Reduzieren hergestellt.

Aufgabe der vorliegenden Erfindung ist die Bereitstellung eines Verfahrens zur Herstellung eines Methanolreformierungskatalysators, wobei sich der Katalysator durch einen geringen Volumenschwund und eine hohe mechanische Härte auszeichnet. Dabei sollen insbesondere kupferhaltige Katalysatoren hergestellt werden.

Die Aufgabe wird erfindungsgemäß gelöst durch ein

Verfahren zur Herstellung eines Katalysators, enthaltend passiviertes Kupfer und Zinkoxid und Aluminiumoxid, dadurch gekennzeichnet, dass man die folgenden Stufen durchführt
(1)
   (a) Fällen einer Lösung von Zink- und Aluminiumsalzen, wobei das Atomverhältnis Zn : Al 3 : 1 bis 1 : 3 beträgt, mit einer Alkalicarbonat- oder -hydroxidlösung bei einem pH-Wert im Bereich von 5 bis 12 und einer Temperatur im Bereich von 20 bis 100°C,
   (b) Abtrennen und Waschen des Niederschlags zur Entfernung von Alkaliionen,
   (c) Trocknen des Niederschlags,
   (d) Calcinieren des Niederschlags bei einer Temperatur im Bereich von 250 bis 800°C zu einem Mischoxid,
   (e) Dispergieren des Mischoxids in einer sauren Lösung von Kupfer- und Zinksalzen, wobei in der Lösung das Atomverhältnis Cu : Zn 1 : 5 bis 20 : 1 beträgt.
   (f) Fällen der Dispersion mit einer Alkalicarbonat- oder -hydroxidlösung bei einem pH-Wert im Bereich von 6 bis 9 und einer Temperatur im Bereich von 20 bis 100°C,
   (g) Durchführen der Schritte (b) bis (d),
   (h) Reduzieren des in Stufe (g) erhaltenen Katalysatorvorläufers mit einem freien Wasserstoff enthaltenden Gas,
   wobei die Lösungen in Schritten (a) und/oder (e) zusätzlich Salze oder Oxide von einem oder mehreren Elementen der Platinmetalle der Gruppen 4, 5, 11 und der Lanthaniden des Periodensystems der Elemente enthalten können oder die Salze oder Oxide auf die Mischoxide aufgebracht sein können,
(2) Passivieren des erhaltenen reduzierten Katalysatorvorläufers,
(3) Formgebung des in Stufe (2) erhaltenen passivierten Katalysatorvorläufers zur Bildung des Katalysators.

Der Ausdruck "passiviertes Kupfer" bedeutet eine zumindest oberflächliche Oxidation der Kupfercluster im Katalysator zur Ausbildung einer zumindest oberflächlichen Kupferoxidschicht. Passiviertes Kupfer ist an der Luft stabil und nicht pyrophor. Der Begriff "passiviertes Kupfer" kann auch durchoxidiertes Kupfer und damit Kupferoxid beinhalten. Vorzugsweise wird unter diesem Ausdruck jedoch verstanden, dass die Kupfercluster oder Kupferkristallite so oberflächlich oxidiert sind, dass sie an Luft nicht pyrophor sind.

Der erfindungsgemäß hergestellte Methanolreformierungskatalysator enthält passiviertes Kupfer und Zinkoxid und Aluminiumoxid als Hauptkomponente. Er kann dabei im Wesentlichen aus diesen Komponenten bestehen, wobei nur geringe Mengen anderer Inhaltsstoffe vorliegen,

Ein derart hergestellter Katalysator wird bevorzugt zur Dampfreformierung von Methanol eingesetzt, kann jedoch ebenso zur Dampfreformierung höherer Alkohole wie C₂₋₂₀ - Alkanole und Kohlenwasserstoffe, zur Dampfreformierung dieser Kohlenwasserstoffe unter Luftzusatz oder auch als CO-Shiftkatalysator eingesetzt werden.

In einem Verfahren zur Dampfreformierung von Methanol durch Umsetzung von Methanol und Wasser an einem derartigen Katalysator wird bevorzugt bei einem Druck von 0,5 bis 10 bar und einer Temperatur von 150 bis 450°C gearbeitet.

Nach dem erfindungsgemäßen Verfahren kann eine Vielzahl von Methanolreformierungskatalysatoren hergestellt werden. Derartige Katalysatorzusammensetzungen sind beispielsweise in DE-A-197 39 773 und EP-A-0 296 734 beschrieben.

Die Katalysatoren enthalten (passiviertes) Kupfer, Zinkoxid und Aluminiumoxid. Generell können zusätzlich bei der Herstellung Salze oder Oxide von einem oder mehreren Elementen der Platinmetalle, der Gruppen 4, 5, 11 und der Lanthaniden des Periodensystems der Elemente eingebracht werden.

Die Erfindung bezieht sich insbesondere auf die Herstellung kupferhaltiger Katalysatoren, wie sie bei Brennstoffzellenfahrzeugen zu Methanolreformierung und zur CO-Shiftreaktion eingesetzt werden. Derartige Katalysatoren zeichnen sich durch eine sehr gute Aktivität aus, was gleichzeitig geringe Katalysatormengen erlaubt. Dies ist eine für den Einsatz im Pkw notwendige Bedingung. Derartige Katalysatoren werden vor Reaktionsbeginn typischerweise im Reaktor mit Wasserstoff reduziert. Dabei wird Kupferoxid mit Wasserstoff zu Kupfer und Wasser umgesetzt. Das metallische Kupfer liegt dabei in Form kleinster Cluster vor, die beispielsweise einen Durchmesser von wenigen nm haben. Sie formen die eigentlich katalytisch aktive Spezies. Für die Reduktion von kupferhaltigen Katalysatoren, wie Methanol-Synthesekatalysatoren oder TTK-Katalysatoren gibt es präzise und detaillierte Vorschriften, siehe beispielsweise Catalyst Handbook, Second Edition, Wolfe Publishing Ltd. 1989.

Die erfindungsgemäß hergestellten Katalysatoren zeichnen sich durch eine Kombination von geringem Volumenschwund und hoher mechanischer Festigkeit aus.

Beides wird erreicht, indem eine Katalysatorvorstufe bereits bei der Präparation mit Wasserstoff reduziert und anschließend mit Sauerstoff wieder passiviert wird. Vorteilhafterweise nimmt man hierzu das getrocknete und calcinierte Fällpulver, das bei großtechnischer Produktion meist in Form von Sprühpulver vorliegt. Das dermaßen vorbehandelte Pulver kann dann zu Formkörpern weiterverarbeitet werden, wobei u.a. folgende Schritte denkbar sind:
- Vorkompaktieren und Tablettieren des erfindungsgemäß vorbehandelten Pulvers zu Tabletten.
- Anmaischen, Kneten/Kollern und Extrudieren zu strangförmigen Extrudaten.
- Anmaischen, Kneten/Kollern und Extrudieren zu komplexen Formkörpern wie z.B. monolithischen Strukturen oder Katalysatorplatten mit oder ohne Sekundärstruktur.
- Aufziehen der katalytisch aktiven Masse auf inerte oder ebenfalls katalytisch aktive Träger mittels Hicoating oder ähnlicher Verfahren.

Bei allen Prozessen ist natürlich auch der Einsatz von Bindemitteln und Zuschlagstoffen erlaubt. Auch sind zahlreiche andere Möglichkeiten der Weiterverarbeitung denkbar.

Die beschriebene Prozedur erlaubt die Herstellung von Formkörpern mit
- geringem Volumenschwund beim Betrieb als Katalysator,
- hoher mechanischer Beständigkeit beim Betrieb im reduzierten Zustand.

Die Reduktion eines Katalysatorvorläufers mit Wasserstoff wurde auch schon eingesetzt, um die Aktivität des Katalysators zu erhöhen. EP-A-0 296 734 offenbart dieses Verfahren zur Vergrößerung der Cu-Oberfläche bei Cu-haltigen Katalysatoren. Hierdurch steigt auch die Aktivität des Katalysators an, wie in oben genanntem Patent an der Wassergas-Shiftreaktion gezeigt wird. Gemäß EP-A-0 296 734 wird die Reduktion jedoch mit einer Zwischenstufe durchgeführt, die zuvor nicht calciniert wurde. Auch darf die Temperatur bei der Reduktion mit Wasserstoff 200°C nicht übersteigen. Katalysatoren, die nach dieser Vorschrift hergestellt wurden, sind jedoch mechanisch wenig stabil, da sie primär noch aus Metallcarbonat- und Hydroxicarbonatphasen bestehen. Derartig vorbehandelte Katalysatoren eignen sich gut für stationäre Anwendungen, jedoch wenig für den mobilen Einsatz.

Erfindungsgemäß wird der Katalysator zuerst bei Temperaturen von vorzugsweise > 300°C calciniert und anschließend reduziert bzw. bei Temperaturen von vorzugsweise < 300°C unter reduzierenden Bedingungen calciniert. Nach der Reduktion wird der Katalysator durch Sauerstoff oder Luft mindesten so lange passiviert, daß ein weiteres Handling des Katalysators unter Luft möglich ist. Der nicht passivierte Katalysator wäre pyrophor. Als Reduktionsmittel ist primär Wasserstoff geeignet, jedoch ist der ersatzweise Einsatz auch von beliebigen, anderen Reduktionen denkbar und möglich.

Für die Reduktion des Katalysators mit Wasserstoff sind u.a. folgende Verfahrensvarianten denkbar:
- isotherme Fahrweise mit konstanter Wassersoffkonzentration
- isotherme Fahrweise mit kontinuierlich zunehmender Wasserstoffkonzentration
- kontinuierliche Erhöhung der Temperatur von Raumtemperatur (Minimum) bis 500°C (Maximum) bei konstanter Wasserstoffkonzentration
- kontinuierliche Erhöhung der Temperatur von Raumtemperatur (Minimum) bis 500°C (Maximum) bei ebenfalls kontinuierlich zunehmender Wasserstoffkonzentration.

Die Reduktion wird vorzugsweise - zumindest anfänglich - mit verdünntem Wasserstoff durchgeführt, wobei zur Verdünnung ein inertes Gas wie Stickstoff oder Helium denkbar ist. Typische Wasserstoffkonzentrationen liegen zwischen 1 und 5%, gegen Ende der Reduktion kann jedoch auch mit reinem Wasserstoff gearbeitet werden. Beim gesamten Prozeß sollte darauf geachtet werden, daß die Exothermie der Reaktion beherrschbar bleibt. Auch wird bei zu schneller Reduktion das Zusammensintern der gebildeten Cu-Kristallite beschleunigt, was zu einem starken Rückgang der Katalysatoraktivität führen kann.

Die anschließende Passivierung wird vorzugsweise ebenfalls zumindest anfänglich mit verdünntem Sauerstoff (verdünnter Luft oder einem anderen Oxidationsmittel) durchgeführt. Denkbar sind analoge oder ähnliche Verfahrensabläufe wie bei der Reduktion.

Wird ausschließlich mit verdünnter Luft bei Raumtemperatur passiviert (z.B. 1% Luft in Stickstoff), so werden die Cluster nur äußerlich passiviert, d.h. es bildet sich eine Hülle aus Kupferoxid. Im Inneren der Cluster liegt noch elementares Kupfer vor. Ein solcher Zustand trifft die erfindungsgemäße Vorbehandlung sehr viel eher als eine verschärfte Passivierung bei höheren Sauerstoffkonzentrationen oder Temperaturen, da unter diesen Bedingungen das gesamte zuvor reduzierte Kupfer wieder reoxidiert wird. Vorzugsweise wird demnach nur äußerlich (oberflächlich) passiviert.

Als technische Lösung bietet sich z.B. die Kopplung zweier Drehrohre an, wobei über eine Inertschleuse die Trennung der Atmosphären gewährleistet sein sollte. Wasserstoff bzw. Sauerstoff (Luft) können im jeweiligen Drehrohr im Gegenstromprinzip zum Katalysatorpulver geleitet werden, wodurch ein günstiger Konzentrationsgradient erreicht wird.

Die Formgebung in Stufe (3) führt vorzugsweise zu Schichten, Extrudaten, Monolithen, Strängen, Pellets oder Tabletten.

Die Stufe (1) wird wie folgt durchgeführt:
(a) Fällen einer Lösung von Zink- und Aluminiumsalzen, wobei das Atomverhältnis Zn : Al 3 : 1 bis 1 : 3 beträgt, mit einer Alkalicarbonat- oder -hydroxidlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer- und Zinksalzen, wobei in der Lösung das Atomverhältnis Cu : Zn 1 : 5 bis 20 : 1 beträgt,
(f) Fällen der Dispersion mit einer Alkalicarbonat- oder -hydroxidlösung bei einem pH-Wert im Bereich von 6 bis 9 und einer Temperatur im Bereich von 20 bis 100°C,
(g) Durchführen der Schritte (b) bis (d),
(h) Reduzieren des in Stufe (g) erhaltenen Katalysatorvorläufers mit einem freien Wasserstoff enthaltenden Gas.

Besonders bevorzugte Katalysatoren weisen ein Atomverhältnis Cu : Zn von 1 : 5 bis 5 : 1, besonders bevorzugt 1 : 1 bis 4 : 1, insbesondere 2 : 1 bis 3 : 1 auf. Das Atomverhältnis (Cu + Zn) : Al beträgt vorzugsweise 99 : 1 bis 70 : 30, besonders bevorzugt 95 : 5 bis 80 : 20. Speziell bevorzugt ist ein Verhältnis Cu : Zn : Al von etwa 65 : 25 : 10.

Dies entspricht einer Zusammensetzung von etwa 67 Gew.-% CuO, 26,4 Gew.-% ZnO und 6,6 Gew.-% Al₂O₃ im fertigen Katalysator.

Zusätzlich zu den drei Elementen Cu, Zn und Al können noch weitere Elemente in den Katalysator eingebracht werden, wie Platinmetalle, Elemente der Gruppen 4, 5, 11 und der Lanthaniden des Periodensystems der Elemente. Bevorzugte Beispiele sind Pd, Pt, Rh, Ln, Os, Au, Zr, Ti, V, Nb, Ta sowie die Lanthaniden.

Bevorzugte erfindungsgemäß herzustellende Katalysatorzusammensetzungen sind in DE-A- 197 39 773 beschrieben.

Dabei erfolgt in Stufe (c) das Trocknen vorzugsweise bei einer Temperatur von 20 bis 400°C, besonders bevorzugt 50 bis 200°C, insbesondere 80 bis 130°C. Die Calcinierung in Stufe (d) erfolgt vorzugsweise bei Temperaturen von 200 bis 800°C, besonders bevorzugt 250 bis 600°C, insbesondere 300 bis 500°C.

Die erfindungsgemäß hergestellten Katalysatoren weisen einen sehr geringen Volumenschwund bei gleichzeitig nur geringem Verlust der Seitendruckfestigkeit beim Betrieb im Reaktor, insbesondere als Kraftfahrzeugkatalysator, auf. Die erfindungsgemäßen Verfahrensschritte werden bereits bei der Katalysatorherstellung durchgeführt. Dabei fallen keine zusätzlichen, aufwendigen Formierungsschritte an.

Wird die Passivierung des Katalysators schonend durchgeführt, d. h. es wird bei tiefen Temperaturen (< 50°C) und geringen Wasserstoffpartialdrücken gearbeitet, so gelingt es, die nach der Reduktion vorliegenden Cu-Cluster nur oberflächlich mit einer Schicht aus Cu₂O zu passivieren. Der Kern der Cluster besteht weiterhin aus metallischem Kupfer. Ein derart hergestellter Katalysator kann unter Luft gehandhabt werden und kann nach Befüllen eines mobilen Reformers dort sehr leicht und nur unter moderater Wasserstoffentwicklung reaktiviert werden, da ein Großteil des Kupfers noch in metallischer Form vorliegt. Wird hingegen ein nicht vorbehandelter Katalysator in einen derartigen Reformer eingefüllt, so muss der Katalysator komplett im Reformer aktiviert werden, was mit einer starken Exothermie und sehr langen Zeiten für die Durchführung verbunden ist. Ein erfindungsgemäß vorbehandelter Katalysator kann demnach durch geeignete Reduktion/Passivierung das "Anfahren" im PKW deutlich vereinfachen.

Die Erfindung wird mit einem Beispiel näher erläutert. Zusätzlich sollen entsprechende Gegenbeispiele zeigen, daß es bei Anwendung andersartiger Methoden eines erhöhten Aufwands bedarf, gleiche Zielgrößen bezüglich Volumenschwund und Härte zu erreichen. In aller Regel erhält man bei der Anwendung derartiger Methoden Katalysatoren, die entweder hart sind oder einen geringen Volumenschwund aufweisen. Beides gemeinsam ist nach dem Stand der Technik jedoch nicht möglich.

### Beispiel 1:

Ein Cu-Katalysator auf Basis Kupfercarbonat wird analog EP-A-0 296 734 (Beispiel 1) hergestellt. Die Zusammensetzung in Atom-% beträgt: Cu = 65%, Zn = 25%, Al = 10%. Das Fällprodukt der zweiten Fällstufe wird Na-frei gewaschen und bei 120°C getrocknet. Anschließend wird das Produkt bei 300°C für 4 Stunden calciniert und zu Splitt von 0,5 bis 0,7 mm zerkleinert.

Von diesem Splitt werden 4060 g in einem beheizbaren Röhrenofen eingebaut (Durchmesser: 100 mm, Höhe: 1000 mm). Der Ofen wird auf 200°C beheizt und der Splitt mit einer Mischung aus 1% H₂ und 99% N₂ (gesamt: 100 Nl/h) für 16 h durchströmt.

Anschließend wird der Wasserstoff abgestellt und der Ofen auf Raumtemperatur abgekühlt. Zum Passivieren wird der Stickstoff sukzessiv mit Luft angereichert, so daß die Temperatur im Katalysator nie über 50°C steigt. Der Endpunkt der Passivierung ist dann erreicht, wenn aller Stickstoff durch Luft ausgetauscht ist. Der ausgebaute Katalysator zeigt im Vergleich zum Einbau eine um 14,2% geringere Masse und ein um 14% geringeres Volumen.

Der Splitt wird anschließend vorkompaktiert und auf einer Tablettiermaschine zu 1,5 x 1,5 mm Kleintabletten tablettiert. Die Tablettierung wird so durchgeführt, daß die Seitendruckfestigkeit der Tabletten bei ca. 40 N liegt. Die BET-Oberfläche der Tabletten beträgt 51 m²/g.

### Vergleichsbeispiel 1:

Ein Cu-Katalysator auf Basis Kupfercarbonat wird analog EP-A-0 296 734 (Beispiel 1) hergestellt. Die Zusammensetzung in Atom-% beträgt: Cu = 65%, Zn = 25%, Al = 10%. Das Fällprodukt der zweiten Fällstufe wird Na-frei gewaschen und bei 120°C getrocknet. Anschließend wird das Produkt bei 300°C für 4 Stunden calciniert und zu Splitt von 0,5 bis 0,7 mm zerkleinert. Der Splitt wird direkt zu 1,5 mm Tabletten tablettiert, wobei eine Seitendruckfestigkeit von ca. 50 N eingestellt wird. Die BET-Oberfläche dieser Tabletten liegt bei 65 m²/g.

### Katalysatortest:

Die Katalysatoren werden in einem Rohrreaktor gefüllt (Durchmesser 10 mm; Füllmenge = 10 ml) und bei 280°C und 2 bar mit einer Mischung aus Methanol und Wasser M/M = 1,5 beaufschlagt. Die Katalysatoren werden zwischen 30 und 40 Stunden bei diesen Bedingungen betrieben. Beide Katalysatoren zeigen einen vergleichbaren Methanolumsatz und somit auch eine vergleichbare Wasserstoffentwicklung. Die Ausbaukatalysatoren wurden bezüglich Volumenschwund und Seitendruckfestigkeit vermessen. Die Ergebnisse sind in Tabelle 1 zusammengefaßt:

**Tabelle 1: Seitendruckfestigkeit und Volumenschwund nach Katalysatortest**

| Katalysator vor Test | Katalysators aus Beispiel 1 | Katalysators aus Vergleichsbeispiel 11 |
|---|---|---|
| Seitendruckfestigkeit [N/Tablette] | 39,5 | 51,0 |
| | | |

| Katalysator nach Test | Katalysator aus Beispiel 1 | Katalysator aus Vergleichsbeispiel 1 |
|---|---|---|
| Seitendruckfestigkeit [N/Tablette] | 34,2 | 7,4 |
| Volumenschwund [%] | 12,5 | 22,4 |

### Vergleichsbeispiel 2:

Der Katalysator aus Gegenbeispiel 1 wird vor dem Einbau in den Testreaktor einem mehrmaligen Oxidations- und Reduktionszyklus unterworfen. Dabei wird bei der Reduktion der Wasserstoffgehalt sukzessive bis auf 3 Vol.-% erhöht, der Sauerstoffgehalt bei der Passivierung beträgt zwischen 0,5 und 1,0 Vol.-%. Der Zyklus wird 5-fach durchlaufen. Nach Beendigung der Vorbehandlung ist der Katalysator um ca. 20 Vol.-% geschrumpft; die Seitendruckfestigkeit ist auf ein Zehntel des ursprünglichen Wertes abgesunken. Anschließend wird mit diesem Katalysator der oben genannte Test durchgeführt. Der erreichte MeOH-Umsatz liegt ca 10% unter dem Wert des Katalysators aus Beispiel 1. Der nach Versuchsende ausgebaute Katalysator zeigt die in Tabelle 2 zusammengefassten Eigenschaften:

**Tabelle 2: Seitendruckfestigkeit und Volumenschwund nach Katalysatortest**

| Katalysator vor Test (jedoch nach Vorbehandlung) | Katalysator aus Beispiel 1 | Katalysator aus Vergleichsbeispiel 2 |
|---|---|---|
| Seitendruckfestigkeit [N/Tablette] | 39,5 | 3,5 |
| | | |

| Katalysator nach Test (jedoch nach Vorbehandlung) | Katalysator aus Beispiel 1 | Katalysator aus Vergleichsbeispiel 2 |
|---|---|---|
| Seitendruckfestigkeit [N/Tablette] | 34,2 | 2,4 |
| Volumenschwund [%] | 12,5 | 1,5 |

Die Ergebnisse zeigen, daß durch die gewählte Vorbehandlung der Volumenschwund des Katalysators gesenkt wird, jedoch geht gleichzeitig die Seitendruckfestigkeit so stark zurück, daß ein Einsatz in einem mobilen Reformer nicht mehr möglich ist. Das Katalysatorpellet aus Vergleichsbeispiel 2 läßt sich ohne Probleme mit der Hand verreiben

## Patentansprüche

1. Verfahren zur Herstellung eines Katalysators, enthaltend passiviertes Kupfer und Zinkoxid und Aluminiumoxid, **dadurch gekennzeichnet, daß** man die folgenden Stufen durchführt
(1)
(a) Fällen einer Lösung von Zink- und Aluminiumsalzen, wobei das Atomverhältnis Zn : Al 3 : 1 bis 1 : 3 beträgt, mit einer Alkalicarbonat- oder -hydroxidlösung bei einem pH-Wert im Bereich von 5 bis 12 und einer Temperatur im Bereich von 20 bis 100°C,
(b) Abtrennen und Waschen des Niederschlags zur Entfernung von Alkaliionen,
(c) Trocknen des Niederschlags,
(d) Calcinieren des Niederschlags bei einer Temperatur im Bereich von 250 bis 800°C zu einem Mischoxid,
(e) Dispergieren des Mischoxids in einer sauren Lösung von Kupfer- und Zinksalzen, wobei in der Lösung das Atomverhältnis Cu : Zn 1 : 5 bis 20 : 1 beträgt.
(f) Fällen der Dispersion mit einer Alkalicarbonat- oder -hydroxidlösung bei einem pH-Wert im Bereich von 6 bis 9 und einer Temperatur im Bereich von 20 bis 100°C,
(g) Durchführen der Schritte (b) bis (d),
(h) Reduzieren des in Stufe (g) erhaltenen Katalysatorvorläufers mit einem freien Wasserstoff enthaltenden Gas,
wobei die Lösungen in Schritten (a) und/oder (e) zusätzlich Salze oder Oxide von einem oder mehreren Elementen der Platinmetalle der Gruppen 4, 5, 11 und der Lanthaniden des Periodensystems der Elemente enthalten können oder die Salze oder Oxide auf die Mischoxide aufgebracht sein können,
(2) Passivieren des erhaltenen reduzierten Katalysatorvorläufers,
(3) Formgebung des in Stufe (2) erhaltenen passivierten Katalysatorvorläufers zur Bildung des Katalysators.

## Claims

1. Process for the preparation of a catalyst containing passivated copper and zinc oxide and alumina, **characterized in that** the following stages are carried out
(1)
(a) precipitating a solution of zinc and aluminum salts, the atomic Zn : Al ratio being 3 : 1 - 1 : 3, with an alkali metal carbonate or hydroxide solution at a pH of from 5 to 12 and at from 20 to 100°C,
(b) separating off and washing the precipitate to remove alkali metal ions,
(c) drying the precipitate,
(d) calcining the precipitate at from 250 to 800°C to give a mixed oxide,
(e) dispersing the mixed oxide in an acidic solution of copper and zinc salts, the atomic Cu : Zn ratio of the solution being from 1 : 5 to 20 : 1,
(f) precipitating the dispersion with an alkali metal carbonate or hydroxide solution at a pH of from 6 to 9 and at from 20 to 100°C,
(g) carrying out steps (b) to (d),
(h) reducing the catalyst precursor obtained in stage (g) by means of a gas containing free hydrogen,
it being possible for the solutions in steps (a) and/or (e) additionally to contain salts or oxides of one or more elements of the platinum metals of groups 4, 5 and 11 and of the lanthanides of the Periodic Table of the Elements or for the salts or oxides to be applied to the mixed oxides,
(2) passivating the reduced catalyst precursor obtained,
(3) shaping the passivated catalyst precursor obtained in stage (2) to form the catalyst.

## Revendications

1. Procédé de préparation d'un catalyseur contenant du cuivre passivé et de l'oxyde de zinc et de l'oxyde d'aluminium, **caractérisé en ce que** l'on effectue les étapes suivantes
(1)
(a) précipitation d'une solution de sels de zinc et d'aluminium, le rapport atomique Zn : Al étant de 3:1 à 1:3, avec une solution de carbonate ou d'hydroxyde de métal alcalin à un pH dans la plage de 5 à 12 et à une température dans la plage de 20 à 100 °C,
(b) séparation et lavage du précipité pour l'élimination des ions de métaux alcalins,
(c) séchage du précipité,
(d) calcination du précipité à une température dans la plage de 250 à 800 °C pour donner lieu à un oxyde mixte,
(e) dispersion de l'oxyde mixte dans une solution de sels de cuivre et de zinc, le rapport atomique Cu : Zn dans la solution étant de 1:5 à 20:1,
(f) précipitation de la dispersion avec une solution de carbonate ou d'hydroxyde de métal alcalin à un pH dans la plage de 6 à 9 et à une température dans la plage de 20 à 100 °C,
(g) réalisation des étapes (b) à (d),
(h) réduction du précurseur de catalyseur obtenu dans l'étape (g) par un gaz contenant de l'hydrogène libre,
les solutions dans les étapes (a) et/ou (e) pouvant, en outre, contenir des sels ou des oxydes d'un ou de plusieurs éléments des métaux du type platine des groupes 4, 5, 11 et des lanthanides du système périodique des éléments, ou les sels ou oxydes pouvant être appliqués sur les oxydes mixtes,
(2) passivation du précurseur de catalyseur obtenu,
(3) façonnage du précurseur de catalyseur passivé, obtenu dans l'étape (2) pour former le catalyseur.
